# EUROPEAN PATENT SPECIFICATION

(11) **EP 3 349 284 B1**
(45) Date of publication and mention of the grant of the patent: **24.07.2019**
(21) Application number: 16843916.4
(22) Date of filing: 31.08.2016
(51) Int. Cl.: H01M 8/04, H01M 8/04858, H01M 8/10, H01M 8/12, H01M 8/249, H01M 8/04089, H01M 8/04537, H01M 8/04746, H01M 8/04828, H01M 8/1018, H01M 8/124

(54) **FUEL CELL SYSTEM**
BRENNSTOFFZELLENSYSTEM
SYSTÈME DE PILE À COMBUSTIBLE

(30) Priority: 09.09.2015 JP 2015177282
(43) Date of publication of application: 18.07.2018
(73) Proprietor: Panasonic Intellectual Property Management Co., Ltd., Osaka-shi, Osaka 540-6207 (JP)
(72) Inventor: TANIYAMA, Akiko, Osaka-shi Osaka 540-6207 (JP); TAMURA, Yoshio, Osaka-shi osaka 540-6207 (JP); OZEKI, Masataka, Osaka- shi Osaka 540-6207 (JP)
(74) Representative: Grünecker Patent- und Rechtsanwälte PartG mbB
(86) International application number: PCT/JP2016/003965
(87) International publication number: WO 2017/043048

(56) References cited:
- DE-A1- 10 332 336
- JP-A- 2004 199 997
- JP-A- 2005 108 509
- JP-A- 2006 049 138
- JP-A- 2013 008 455
- US-A1- 2005 249 990
- US-A1- 2009 042 082
- US-A1- 2012 088 169
- US-A1- 2012 178 005

## Description

### TECHNICAL FIELD

The present invention relates to a fuel cell system in which a plurality of fuel cell stacks for reusing fuel gas that has not been used for power generation are connected.

### BACKGROUND ART

Conventionally, in such a type of fuel cell system, fuel gas is supplied to fuel cell stacks at a flow rate larger than a theoretical flow rate of fuel gas used for power generation. A rate of a fuel gas flow rate actually used for power generation with respect to a flow rate of fuel gas supplied to a fuel cell stack is called a fuel utilization rate, and a fuel utilization rate in a conventional fuel cell system practically has an upper limit such as, for example, 80%.

The fuel gas that has not been used for power generation is burned and exhausted, which deteriorates power generation efficiency of the fuel cell system. Consequently, in the fuel cell system, fuel gas that has not been used in the fuel cell stack is circulated by a pump to be reused (e.g., see PTL 1).

FIG. 3 illustrates a conventional fuel cell system described in PTL 1. As illustrated in FIG. 3, the conventional fuel cell system includes fuel gas feeder 501, fuel gas supply path 502a, fuel gas circulation path 503a, controller 506, pump 507, and fuel cell stack 510a.

In conventional fuel cell system 500, the fuel gas flowed through fuel gas supply path 502a from fuel gas feeder 501 is supplied to fuel cell stack 510a, and the fuel gas that has not been used in fuel cell stack 510a is returned to fuel gas supply path 502a by pump 507 provided on fuel gas circulation path 503a.

Furthermore, there is a system in which a plurality of fuel cell units are connected in parallel to yield a power generation output larger than that in a conventional fuel cell system (e.g., see PTL 2).

FIG. 4 illustrates a conventional fuel cell system described in PTL 2. As illustrated in FIG. 4, conventional fuel cell system 600 in which a plurality of fuel cell units are connected in parallel includes controllers 606a to 606d, power controllers 608a to 608d, fuel cell stacks 610a to 610d, and fuel cell units 620a to 620d.

Fuel cell units 620a to 620d respectively include controllers 606a to 606d, power controllers 608a to 608d, and fuel cell stacks 610a to 610d. Controllers 606a to 606d respectively control power generation outputs of fuel cell stacks 610a to 610d in response to fluctuation of electric power consumed by an electronic device, and respectively convert DC power generated by fuel cell stacks 610a to 610d into AC power by power controllers 608a to 608d.

In the above-mentioned conventional fuel cell system, the fuel gas that has not been used in fuel cell stacks 610a to 610d is circulated by pumps to be reused in fuel cell units 620a to 620d. When a plurality of fuel cell units 620a to 620d configured in this manner are connected, a large power generation output can be obtained and a large range of power generation output from a low power generation output to a high power generation output can be obtained, which makes it possible to fluctuate power generation output in response to fluctuation of electric power consumed by the electronic device. However, in the above-mentioned conventional fuel cell system, a pump is provided on each of fuel gas circulation paths of respective fuel cell units 620a to 620d, disadvantageously increasing power consumption. Furthermore, US 2005/249990 and US 2012/178005 disclose a fuel cell system comprising a plurality of fuel cell modules with a common fuel recycle line and either a common ejector or a common circulation pump.

### Citation List

### Patent Literatures

PTL 1: Unexamined Japanese Patent Publication No. 2010-1015PTL 2: Unexamined Japanese Patent Publication No. 2014-103092

### SUMMARY OF THE INVENTION

The present invention has been conceived in light of the above-mentioned conventional problems, and provides a fuel cell system that reduces power consumption of the fuel cell system while keeping follow-up capability to fluctuate power generation output (capability to fluctuate power generation output depending on change of target power generation output) equivalent to a case where pumps are provided on all fuel gas circulation paths of a respective plurality of fuel cell stacks without providing a pump to each of the fuel cell circulation paths in response to fluctuation of electric power consumed by the electronic device driven by the fuel cell system in a fuel cell system in which the plurality of fuel cell stacks are connected.

Specifically, a fuel cell system according to an aspect of an exemplary embodiment of the present invention includes a plurality of fuel cell stacks, fuel gas supply paths configured to supply fuel gas to the respective plurality of fuel cell stacks, and fuel gas circulation paths configured to return fuel gas that has not been used in the respective plurality of fuel cell stacks to the respective fuel gas supply paths. Each of the plurality of fuel cell stacks includes at least one power generation output variable fuel cell stack whose power generation output is variably set to be operated using the fuel gas supplied through corresponding one of the fuel gas supply paths, and at least one power generation output constant fuel cell stack that is operated at a constant power generation output using the fuel gas supplied through corresponding one of the fuel gas supply paths. Furthermore, in the fuel cell system according to the aspect of the exemplary embodiment of the present invention, a flow rate regulator configured to adjust a flow rate of the fuel gas is provided on corresponding one of the fuel gas circulation paths configured to return the fuel gas that has not been used to be exhausted from the at least one power generation output variable fuel cell stack to the corresponding one of the fuel gas supply paths of the at least one power generation output variable fuel cell stack. Furthermore, in the fuel cell system according to the aspect of the exemplary embodiment of the present invention, an ejector is provided on a merging portion of corresponding one of the fuel gas supply paths of the at least one power generation output constant fuel cell stack and corresponding one of the fuel gas circulation paths configured to return the fuel gas that has not been used to be exhausted from the at least one power generation output constant fuel cell stack to the corresponding one of the fuel gas supply paths of the at least one power generation output constant fuel cell stack.

Such a configuration makes it possible to obtain a large power generation output and obtain a wide range power generation output from a lower power generation output to a high power generation output. This makes it possible to reduce power consumption of the fuel cell system while keeping follow-up capability to fluctuate power generation output equivalent to the case where a pump is provided on all the fuel gas circulation paths in each of the plurality of fuel cell stacks in response to fluctuation of electric power consumed by the electronic device.

Furthermore, in a fuel cell system according to an aspect of the exemplary embodiment of the present invention, the flow rate regulator is configured with a flow rate variable pump. Such a configuration can finely and smoothly adjust a circulated fuel gas flow rate that is changed depending on the magnitude of the power generation output, which makes it possible to improve the follow-up capability to fluctuate the power generation output in response to the fluctuation of the electric power consumed by the electronic device.

Furthermore, in a fuel cell system according to an aspect of the exemplary embodiment of the present invention, the flow rate regulator is configured with a flow rate variable ejector. This configuration enables an opening area of an ejector nozzle unit to be variable by electrical driving and does not need driving electric power as long as the opening area is not changed after a movable needle inside a nozzle unit is once moved. This configuration makes it possible to further reduce power consumption as compared with a case of using a flow rate variable pump as well as reduce noise of the fuel cell system because vibration during driving the fuel cell system can be reduced.

Furthermore, in a fuel cell system according to an aspect of the exemplary embodiment of the present invention, a total value of a maximum power generation output of the at least one power generation output variable fuel cell stack is set not less than a power generation output of a power generation output constant fuel cell stack whose power generation output is smallest among the at least one power generation output constant fuel cell stack, and when the at least one power generation output constant fuel cell stack includes a plurality of the power generation output constant fuel cell stacks, the total value is set not less than a maximum value of power generation output differences among the power generation output constant fuel cell stacks. In this case, the maximum value of the power generation output differences among the at least one power generation output constant fuel cell stack is calculated as described below. That is, combinations are made of all power generation outputs from one to all of at least one power generation output constant fuel cell stack, and the sum of power generation outputs (power generation output total value) of power generation output constant fuel cell stacks is calculated for each combination. The calculated power generation output total values are arranged from a smaller value in sequence, and the maximum value among the differences between two adjacent power generation output total values is determined. This value becomes the maximum value of the power generation output differences among at least one power generation output constant fuel cell stack.

This configuration enables to obtain a large power generation output and to obtain a wide range of power generation output from a low power generation output to a high power generation output, which makes it possible to fluctuate power generation output more reliably in response to the fluctuation of electric power consumed by the electronic device.

### BRIEF DESCRIPTION OF DRAWINGS

FIG. 1 is a block diagram illustrating a configuration of a fuel cell system according a first exemplary embodiment of the present invention.
FIG. 2 is a block diagram illustrating a configuration of a fuel cell system according a second exemplary embodiment of the present invention.

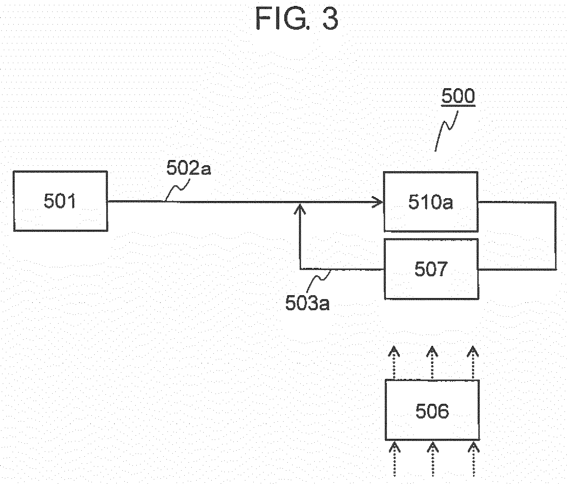

FIG. 3 is a block diagram illustrating a configuration of a conventional fuel cell system of PTL 1.

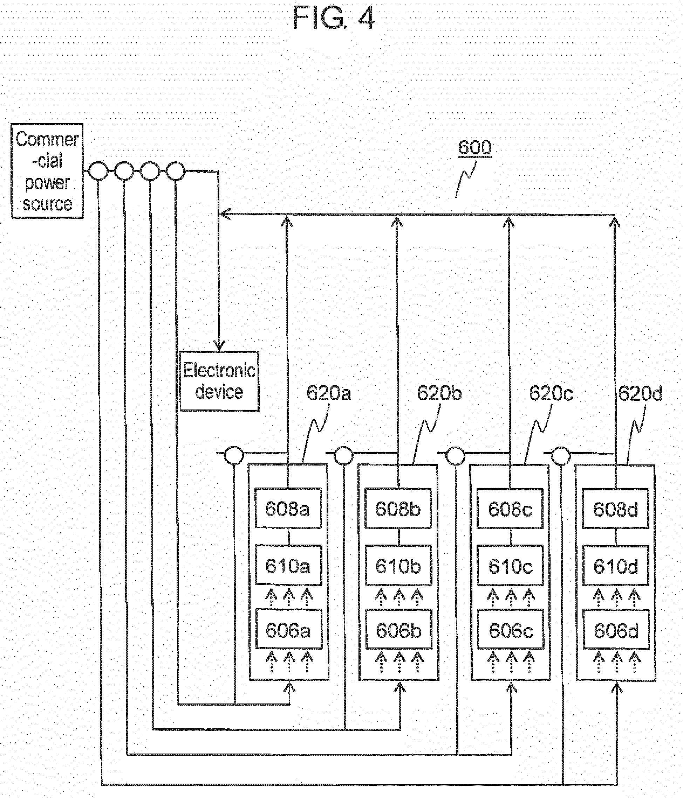

FIG. 4 is a block diagram illustrating a configuration of a conventional fuel cell system of PTL 2.

### DESCRIPTION OF EMBODIMENTS

Hereinafter, exemplary embodiments of the present invention will be described with reference to the drawings. Note that, the present invention is not limited by the exemplary embodiments.

### (First Exemplary Embodiment)

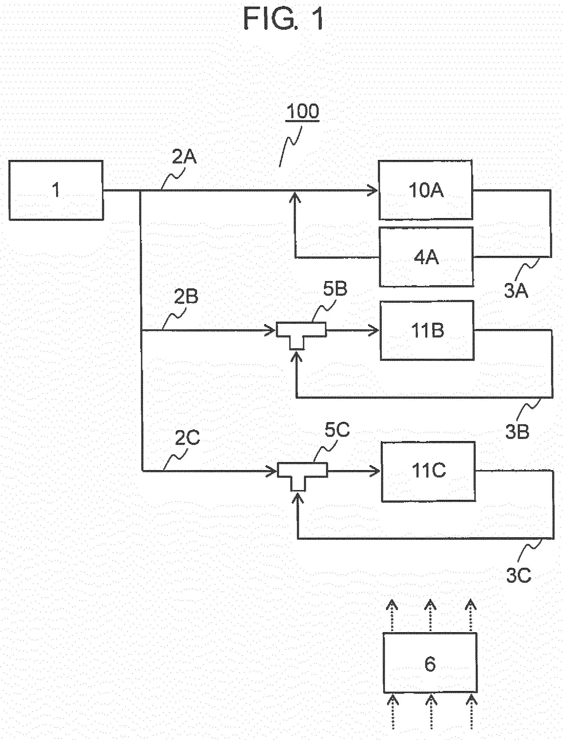

FIG. 1 is a block diagram illustrating a configuration of a fuel cell system according a first exemplary embodiment of the present invention.

As illustrated in Fig. 1, fuel cell system 100 of the present exemplary embodiment includes a plurality of fuel cell stacks, fuel gas supply paths 2A to 2C, and fuel gas circulation paths 3A to 3C. Each of the plurality of fuel cell stacks includes at least one power generation output variable fuel cell stack 10A, and at least one power generation output constant fuel cell stack 11B or 11C. Fuel gas supplied to the plurality of fuel cell stacks is supplied from fuel gas feeder 1. The fuel cell system 100 of the present exemplary embodiment further includes flow rate regulator 4A, ejectors 5B, 5C, and controller 6.

Fuel gas feeder 1 is a device for supplying fuel gas to power generation output variable fuel cell stack 10A and power generation output constant fuel cell stacks 11B, 11C. Fuel gas feeder 1 is configured with, for example, a fuel gas infrastructure having a predetermined feeding pressure. For example, hydrogen gas is used for the fuel gas.

Fuel gas supply path 2A is a path for supplying fuel gas from fuel gas feeder 1 to power generation output variable fuel cell stack 10A. Fuel gas supply paths 2B, 2C are paths for respectively supplying the fuel gas to power generation output constant fuel cell stacks 11B, 11C from fuel gas feeder 1. A fuel gas switching valve (not shown) for opening and closing flow path is provided on each of fuel gas supply paths 2A to 2C.

Fuel gas circulation path 3A is a path for returning unused fuel gas exhausted from power generation output variable fuel cell stack 10A to fuel gas supply path 2A. Fuel gas circulation paths 3B, 3C are paths for respectively returning unused fuel gas exhausted from power generation output constant fuel cell stacks 11B, 11C to fuel gas supply paths 2B, 2C. Note that the unused fuel gas denotes fuel gas that has not been used for power generation in the fuel cell stacks, and hereinafter, also referred to as circulation fuel gas.

An upstream end of fuel gas circulation path 3A is connected to an outlet of power generation output variable fuel cell stack 10A on hydrogen side, and a downstream end of fuel gas circulation path 3A is connected to fuel gas supply path 2A. Upstream ends of fuel gas circulation paths 3B, 3C are respectively connected to outlets of power generation output constant fuel cell stacks 11B, 11C on hydrogen side, and downstream ends of fuel gas circulation paths 3B, 3C are respectively connected to fuel gas supply paths 2B, 2C.

Flow rate regulator 4A is placed on fuel gas circulation path 3A, and is a flow rate variable pump for adjusting a circulation fuel gas flow rate of the fuel gas flowing in fuel gas circulation path 3A, and a constant volume pump is used in the present exemplary embodiment.

Ejectors 5B, 5C are respectively disposed at merging portions of fuel gas supply paths 2B, 2C and fuel gas circulation paths 3B, 3C. Ejectors 5B, 5C are configured with a nozzle unit (not shown), a mixing unit (not shown), and a diffuser unit (not shown).

The nozzle units increase flow velocity of gas by narrowing cross section areas of respective fuel gas supply paths 2B, 2C, through which the fuel gas pumped by fuel gas feeder 1 flows, to reduce the pressure of the fuel gas by Venturi effect. The mixing units suction the circulation fuel gas routed through respective fuel gas circulation paths 3B, 3C by pressure drop generated at the nozzle units, and mixes the circulation fuel gas with the fuel gas.

The diffuser unit has a tapered portion whose diameter of flow path cross section area is continuously increased. The diffuser units recover the pressure drop generated in the nozzle unit and supplies mixed gas of fuel gas and circulation fuel gas to corresponding one of power generation output constant fuel cell stacks 11B, 11C.

In this manner, ejectors 5B, 5C are configured to make the suctioned circulation fuel gas flow rate constant when the fuel gas flow rate of the fuel gas flowing in ejectors 5B, 5C is constant.

Controller 6 only needs to have control function, and includes an arithmetic processing unit (not shown), and a storage unit (not shown) that stores a control program. For example, a CPU is used for the arithmetic processing unit. For example, a memory is used for the storage unit.

Power generation output variable fuel cell stack 10A and power generation output constant fuel cell stacks 11B, 11C generate electric power by using the fuel gas supplied from fuel gas feeder 1 and oxidizing gas supplied from an oxidizing gas feeder (not shown).

For example, a solid polymer fuel cell is used as the fuel cell stack. A power generation output of power generation output variable fuel cell stack 10A is variably operated by controller 6, and power generation output constant fuel cell stacks 11B, 11C are operated at a constant power generation output by controller 6.

Herein, a reference mark attached to a plurality of identical elements will be described. For example, in the case of "power generation output constant fuel cell stacks 11B, 11C", suffixes "B" and "C" are attached to discriminate the same elements with each other, and denotes that two power generation output constant fuel cell stacks 11B, 11C are included.

Furthermore, when the number of power generation output constant fuel cell stacks is increased, they are referred to as power generation output constant fuel cell stacks 11D, 11E, 11F, ..., 11N, and so on. In the following description, when referring to any of power generation output constant fuel cell stacks 11B, 11C, description is made using "power generation output constant fuel cell stack 11" while attaching only reference mark "11" and omitting the suffix. In this case, power generation output constant fuel cell stack 11 may be one fuel stack or a plurality of fuel cell stacks.

Likewise, fuel gas supply paths 2A to 2C denote that three fuel gas supply paths are included, and fuel gas circulation paths 3A to 3C denote that three fuel gas circulation paths are included. Likewise, ejector 5B, 5C also denote that two ejectors are included. Furthermore, for example, ejector 5B denotes an ejector provided on the merging portion of fuel gas supply path 2B and fuel gas circulation path 3B, and ejector 5C denotes an ejector provided on the merging portion of fuel gas supply path 2C and fuel gas circulation path 3C.

Hereinafter, operation and effect of fuel cell system 100 of the present exemplary embodiment configured as above will be described.

First, when generating electric power, fuel cell system 100 performs the following operation. Note that, in the present exemplary embodiment, it is assumed that the minimum power generation output of power generation output variable fuel cell stack 10A is 1 W, and the power generation output of fuel cell system 100 can be varied in increments of 1 W.

For example, when it is assumed that the power generation output of fuel cell system 100 is 1 W to 2000 W, the power generation output of power generation output variable fuel cell stack 10A is 1 W to 600 W, the power generation output of power generation output constant fuel cell stack 11B is 400 W, and the power generation output of power generation output constant fuel cell stack 11C is 1000 W.

Controller 6 adjusts an AC power supplied from an inverter (not shown) in fuel cell system 100 in response to a fluctuation of electric power consumed by an electronic device (not shown) to determine a target power generation output generated by fuel cell system 100. Furthermore, controller 6 selects an optimum combination to yield the target power generation output from among power generation output variable fuel cell stack 10A and power generation output constant fuel cell stacks 11B, 11C for operation.

Furthermore, when power generation is started, controller 6 opens valves related to a fuel cell stack that is made to start power generation among the fuel gas switching valves (not shown) provided on respective fuel gas supply paths 2A to 2C, and oxidizing gas switching valves (not shown) provided on respective oxidizing gas supplying routs (not shown) for supplying oxidizing gas to power generation output variable fuel cell stack 10A and power generation output constant fuel cell stacks 11B, 11C, and makes the inverter (not shown) start current flowing.

When power generation is stopped, controller 6 makes the inverter (not shown) stop current flowing, and closes valves related to a fuel cell stack that is made to stop power generation among the fuel gas switching valves (not shown) provided on respective fuel gas supply paths 2A to 2C, and oxidizing gas switching valves (not shown) provided on the respective oxidizing gas supplying routs (not shown) for supplying oxidizing gas to power generation output variable fuel cell stack 10A and power generation output constant fuel cell stacks 11B, 11C.

When the target power generation output is 1600 W, controller 6 operates power generation output variable fuel cell stack 10A at a power generation output of 200 W, power generation output constant fuel cell stack 11B at a power generation output of 400 W, and power generation output constant fuel cell stack 11C at a power generation output of 1000 W so that the total of the power generation outputs of power generation output variable fuel cell stack 10A and power generation output constant fuel cell stacks 11B, 11C becomes 1600 W.

The rate of a fuel gas flow rate actually used for power generation with respect to a fuel gas flow rate supplied to power generation output variable fuel cell stack 10A and power generation output constant fuel cell stacks 11B, 11C is referred to as a fuel utilization rate. The fuel utilization rate practically has an upper limit such as, for example, 80%, although the fuel utilization rate differs depending on a construction material of a cell and another factor.

Accordingly, in fuel cell system 100, fuel gas at a flow rate greater than the theoretical fuel gas flow rate used for power generation is supplied to power generation output variable fuel cell stack 10A and power generation output constant fuel cell stacks 11B, 11C.

For example, 2.5 NLM of fuel gas is supplied to power generation output variable fuel cell stack 10A by controller 6 when power generation output variable fuel cell stack 10A is made to generate power at 200 W. Herein, when it is assumed that the fuel utilization rate is 80%, fuel gas of 2 NLM is used for power generation. The circulation fuel gas flow rate that has not been used for power generation to be exhausted becomes 0.5 NLM, and controller 6 makes flow rate regulator 4A return 0.5 NLM of circulation fuel gas to fuel gas supply path 2A.

Furthermore, when it is assumed that the fuel utilization rate is constant, the circulation fuel gas flow rate is also proportional to the magnitude of the power generation output of power generation output variable fuel cell stack 10A. In this case, when the power generation output of power generation output variable fuel cell stack 10A is 600 W, controller 6 makes flow rate regulator 4A adjust the flow rate of the circulation fuel gas such that the flow rate becomes larger than the flow rate of the circulation fuel gas in the case where power generation output of power generation output variable fuel cell stack 10A is 200 W.

Likewise, fuel gas at a flow rate greater than the theoretical fuel gas flow rate used for power generation is also supplied to power generation output constant fuel cell stacks 11B, 11C, and fuel gas that has not been used for power generation is exhausted from power generation output constant fuel cell stacks 11B, 11C.

Herein, different from the case of power generation output variable fuel cell stack 10A, fuel gas that has not been used in power generation output constant fuel cell stacks 11B, 11C to be exhausted is suctioned by ejectors 5B, 5C placed at the respective merging portions of fuel gas supply paths 2B, 2C, and fuel gas circulation paths 3B, 3C.

Each of ejectors 5B, 5C includes therein a nozzle unit (not shown) for ejecting fuel gas. The nozzle unit is configured such that a flow path cross section area of a flow path of fuel gas supply paths 2B, 2C is gradually narrowed toward an inside direction of ejectors 5B, 5C. Furthermore, ejectors 5B, 5C have a mixing unit (not shown) that is joined with respective fuel gas circulation paths 3B, 3C. Furthermore, ejectors 5B, 5C have a diffuser unit (not shown) configured such that a flow path cross section area of a flow path, through which mixture gas of fuel gas and circulation fuel gas flows, is gradually increased toward an external direction from inside of ejectors 5B, 5C.

Such a configuration makes ejectors 5B, 5C provide the fastest flow velocity of the fuel gas and the lowest pressure of the fuel gas at the mixing unit for the fuel gas and circulation fuel gas. By designing the flow path cross section area such that the pressure of the fuel gas at this time becomes lower than the pressure on the upstream side of fuel gas circulation paths 3B, 3C, the circulation fuel gas can be drawn in fuel gas supply paths 2B, 2C.

In ejector 5, when the flow path cross section area of the nozzle unit is constant, the flow velocity of fuel gas in the nozzle unit inside ejector 5 becomes faster as the fuel gas flow rate flowing in ejector 5 becomes larger, which increases pressure drop in the nozzle unit accordingly to make ejector 5 have increased capability of suctioning circulation fuel gas.

That is, when the power generation output is small, gas flow rate flowing in ejector 5 is small, so that capability of suctioning necessary circulation fuel gas cannot be obtained. Therefore, the flow path cross section areas of the nozzle units are optimally designed so as to able to obtain capability of suctioning necessary circulation fuel gas depending on the flow rate of the fuel gas flowing in the nozzle units of ejectors 5B, 5C of power generation output constant fuel cell stacks 11B, 11C that are different in power generation outputs.

The fuel gas that has not been used in power generation output constant fuel cell stacks 11B, 11C to be exhausted is supplied to fuel gas supply paths 2B, 2C by ejectors 5B, 5C optimally designed so as to able to obtain the capability to suction necessary circulation fuel gas with no driving electric power.

When the target power generation output is changed from 1600 W to 1300 W, in order to make the total power generation output of power generation output variable fuel cell stack 10A and power generation output constant fuel cell stacks 11B, 11C become 1300 W, controller 6 increases power generation output of power generation output variable fuel cell stack 10A from 200 W to 300 W, then stops power generation of power generation output constant fuel cell stack 11B, and operates power generation output constant fuel cell stack 11C to keep the power generation output at 1000 W.

In the present exemplary embodiment, the control cycle when the power generation output of power generation output variable fuel cell stack 10A is increased from 200 W to 300 W is assumed to be one second.

Controller 6 makes power generation output of power generation output variable fuel cell stack 10A increase from 200 W to 300 W in increments of 1 W per second. Furthermore, controller 6 makes the inverter stop flowing the current of power generation output constant fuel cell stack 11B and closes the fuel gas switching valve provided on fuel gas supply path 2B and the oxidizing gas switching valve provided on the oxidizing gas supply path for supplying oxidizing gas supplied by the oxidizing gas feeder to power generation output constant fuel cell stack 11B.

Herein, when the power generation output of power generation output constant fuel cell stack 11B is stopped after the power generation output of power generation output variable fuel cell stack 10A is increased from 200 W to 300 W, the power generation output of fuel cell system 100 is temporally increased by 400 W with respect to the target power generation output. In such a case, the increased power generation output 400 W is consumed by, for example, a heater or the like inside fuel cell system 100.

By the above-mentioned configuration, fuel cell system 100 according to the present exemplary embodiment makes it possible to obtain a large power generation output by the combination of the power generation outputs of power generation output variable fuel cell stack 10A, power generation output constant fuel cell stack 11B, and power generation output constant fuel cell stack 11C, as well as obtain wide range power generation outputs from a low power generation output to a high power generation output. This enables to keep follow-up capability for fluctuating power generation output (capability for fluctuating power generation output in response to change of the target power generation output) equivalent to that in the case where a pump is equipped on all the fuel gas circulation paths of the respective plurality of fuel cell stacks (power generation output variable fuel cell stack 10A and power generation output constant fuel cell stacks 11B, 11C) depending on fluctuation of electric power consumed by the electronic device.

Furthermore, since ejector 5B is provided on fuel gas circulation path 3B of power generation output constant fuel cell stack 11B and ejector 5C is provided on fuel gas circulation path 3C of power generation output constant fuel cell stack 11C, the fuel gas that has not been used for power generation can be supplied to fuel gas supply paths 2B, 2C without using driving electric power, which makes it possible to reduce power consumption of fuel cell system 100.

Furthermore, since flow rate regulator 4A is configured with a flow rate variable pump, the circulation fuel gas flow rate that varies depending the magnitude of power generation output can be adjusted finely and smoothly. This makes it possible to further improve the follow-up capability that fluctuates power generation output depending on fluctuation of electric power consumed by the electronic device.

Note that fuel gas feeder 1 is not limited to a fuel gas infrastructure, and may be a fuel gas cylinder, a device configured with a booster and a flow meter to adjust a flow rate of fuel gas, or the like. Furthermore, fuel gas is not limited to hydrogen gas, and hydrocarbon such as city gas, alcohol such as methanol, or the like may be used.

Furthermore, the flow rate variable pump that is flow rate regulator 4A only needs to be able to feed fuel gas at a predetermined flow rate, and for example, a flow rate variable booster may be employed.

Furthermore, controller 6 may be configured with a single controller that performs centralized control, or may be configured with a plurality of controllers that mutually work for distributed control.

Note that power generation output variable fuel cell stack 10A and power generation output constant fuel cell stacks 11B, 11C are not limited to a solid polymer fuel cell, and any type of fuel cell may be employed, and for example, a solid oxide fuel cell, a phosphoric acid fuel cell, or the like may be used.

Note that when power generation output variable fuel cell stack 10A and power generation output constant fuel cell stacks 11B, 11C are configured with a solid oxide fuel cell, a property modification unit (not shown), power generation output variable fuel cell stack 10A, and power generation output constant fuel cell stacks 11B, 11C are incorporated in one container.

In this case, unused fuel gas that is exhausted from power generation output variable fuel cell stack 10A and power generation output constant fuel cell stacks 11B, 11C is returned to an upstream of a property modification unit (not shown) through fuel gas circulation paths 3A to 3C.

Power generation output constant and constant power generation output include a case where current is constant, and also include a case where power generation output is changed due to operation state and deterioration of fuel cell stack.

Ejectors 5B, 5C are not necessarily configured so as to make circulation fuel gas flow in at a position where flow velocity of the fuel gas becomes maximum.

Note that the minimum power generation output of power generation output variable fuel cell stack 10A is set to 1 W in the present exemplary embodiment, but the present invention is not limited thereto, and the minimum power generation output of power generation output variable fuel cell stack 10A may be set to provide the lower limit such as, for example, 200 W. Specifically, when the rated power generation output is 700 W in power generation output variable fuel cell stack 10A, the power generation output may be variable from 1 W to 700 W, or the power generation output may be variable from 200 W to 700 W.

Furthermore, increase or decrease of the power generation output of power generation output variable fuel cell stack 10A is set to be variable in increments of 1 W in the present exemplary embodiment, but the present invention is not limited thereto. It is sufficient that power generation output variable fuel cell stack 10A be set to a value capable of sufficiently responding to increase or decrease of power generation output, and for example, may be set in increments of 10 W.

Note that controller 6 can operate power generation output variable fuel cell stack 10A to be 600 W and power generation output constant fuel cell stack 11C to be 1000 W in power generation outputs so that the total power generation output of power generation output variable fuel cell stack 10A and power generation output constant fuel cell stacks 11B, 11C becomes 1600 W. However, it is preferable that controller 6 controls power generation using power generation output constant fuel cell stack 11B and power generation output constant fuel cell stack 11C as much as possible, because this can reduce power generation output of power generation output variable fuel cell stack 10A to reduce power consumption of flow rate regulator 4A.

Furthermore, when the target power generation output is changed from 1600 W to 1300 W, controller 6 may stop the power generation of power generation output constant fuel cell stack 11B, and thereafter increase the power generation output of power generation output variable fuel cell stack 10A from 200 W to 300 W. However, in this case, the power generation output of fuel cell system 100 is temporary dropped, so that fuel cell system 100 may be configured to supply the insufficient power generation output from a commercial power source.

Furthermore, the control cycle is not limited to one second, and it is sufficient that the control cycle be set depending on the fluctuation rate of the target power generation output.

### (Second Exemplary Embodiment)

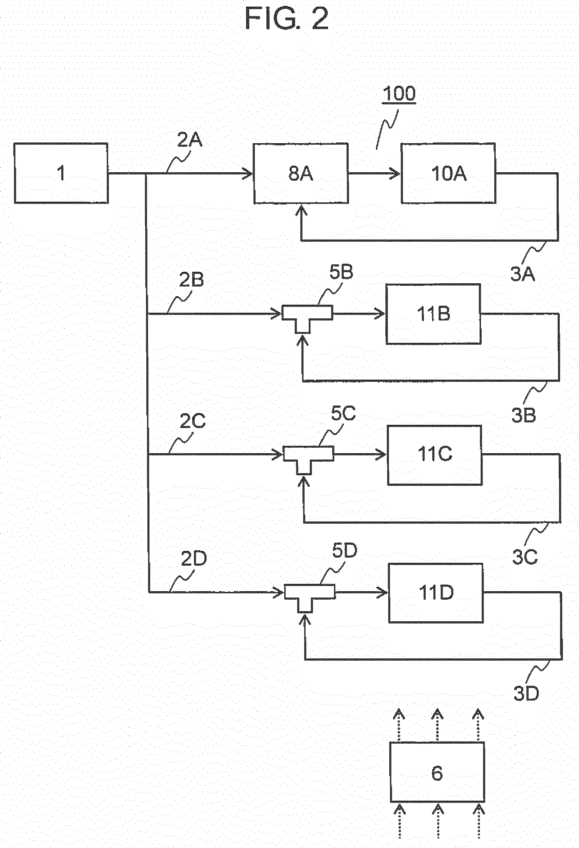

FIG. 2 is a block diagram illustrating a configuration of a fuel cell system according to a second exemplary embodiment of the present invention. Note that constituent elements substantially identical to the constituent elements of the first exemplary embodiment are denoted by the identical reference marks and their description will be omitted.

As illustrated in FIG. 2, in fuel cell system 100 according to the present exemplary embodiment, flow rate variable ejector 8A is disposed at a merging portion of fuel gas supply path 2A and fuel gas circulation path 3A instead of flow rate regulator 4A of the first exemplary embodiment. Furthermore, fuel cell system 100 according to the present exemplary embodiment differs from fuel cell system 100 according to the first exemplary embodiment in that power generation output constant fuel cell stack 11D, fuel gas supply path 2D, fuel gas circulation path 3D, and ejector 5D are added.

As to operation of each device constituting fuel cell system 100 according to the present exemplary embodiment, the overlapping description of the device substantially identical to that in the first exemplary embodiment will be omitted.

In the present exemplary embodiment, controller 6 differs from that in the first exemplary embodiment in that the following operation is performed. That is, the second exemplary embodiment differs from the first exemplary embodiment in that controller 6 makes flow rate variable ejector 8A suction the fuel gas that has not been used for power generation in power generation output variable fuel cell stack 10 to be exhausted (hereinafter, referred to as unused fuel gas or circulation fuel gas). Furthermore, the second exemplary embodiment differs from the first exemplary embodiment in that, the total value of the maximum power generation output of at least one power generation output variable fuel cell stack 10 is set at least not less than the power generation output of power generation output constant fuel cell stack 11 whose power generation output is minimum among the at least one power generation output constant fuel cell stack 11, and when there are a plurality of power generation output constant fuel cell stacks 11, the total value is set not less than the difference of the power generation output between the maximum power generation output of the plurality of power generation output constant fuel cell stacks 11 and the minimum power generation output of the plurality of power generation output constant fuel cell stacks 11.

In the fuel cell system 100 of the present exemplary embodiment, the minimum power generation output of at least one power generation output variable fuel cell stack 10 is set to 1 W, and the increase or decrease of power generation output is variably set in increments of 1 W.

Flow rate regulator 4A is configured with flow rate variable ejector 8A. In fuel cell system 100 of the present exemplary embodiment, ejector 5 has a nozzle unit (not shown) whose flow path cross section area is constant, and is configured such that the suctioned circulation fuel gas flow rate becomes constant when the fuel gas flow rate flowing in ejector 5 is constant.

In contrast, flow rate variable ejector 8A is configured so as to be able to arbitrarily control the flow path cross section area of the nozzle unit (not shown). When the fuel gas flow rate flowing in flow rate variable ejector 8A is constant, when the flow path cross section area of the nozzle unit is narrowed, the suctioned circulation fuel gas flow rate can be increased, and when the flow path cross section area of the nozzle unit is increased, the suctioned circulation fuel gas flow rate can be reduced.

Furthermore, in flow rate variable ejector 8A, a movable needle having a tapered end is coaxially disposed inside the nozzle unit in order to change the flow path cross section area of the nozzle unit. Furthermore, flow rate variable ejector 8A can adjust a projection amount of the tapered end from the nozzle unit by moving the movable needle in an axial direction. Such a configuration enables the flow path cross section area of flow rate variable ejector 8A to be arbitrarily and variably controlled.

The movable needle is configured to be electrically driven in the present exemplary embodiment. Once the movable needle is moved, no driving power is necessary as long as an opening area is changed. Consequently, when a predetermined power generation output is kept, flow rate variable ejector 8A having the movable needle can supply circulation fuel gas with less power consumption as compared with the case where circulation fuel gas is supplied by a flow rate variable pump.

Furthermore, since an opening area of the nozzle unit is configured to be variable by electrical driving, flow rate variable ejector 8A can reduce vibration during driving as compared with a flow rate variable pump, which makes it possible to reduce noise of fuel cell system 100.

Hereinafter, operation and effect of fuel cell system 100 of the present exemplary embodiment configured as above will be described with reference to FIG. 2.

When fuel cell system 100 generates electric power, the following operation is performed.

First, the maximum power generation output of power generation output variable fuel cell stack 10A is set at least not less than the power generation output of one of power generation output constant fuel cell stacks 11B to 11D whose power generation output is smallest among power generation output constant fuel cell stacks 11B to 11D. Furthermore, the maximum power generation output of power generation output variable fuel cell stack 10A is set not less than the maximum value of the power generation output difference among the plurality of power generation output constant fuel cell stacks 11B to 11D when there are a plurality of power generation output constant fuel cell stacks 11B to 11D. When there is a power generation output that is the smallest power generation output of power generation output constant fuel cell stack 11, and the maximum value (power generation output) of power generation output differences of the plurality of power generation output constant fuel cell stacks 11, the power generation outputs are compared and the larger one is set as the maximum power generation output of power generation output variable fuel cell stack 10A.

Herein, in the case where there are a plurality of power generation output constant fuel cell stacks 11 (e.g., power generation output constant fuel cell stacks 11B to 11D), a method of calculating the maximum value of the power generation output differences among power generation output constant fuel cell stacks 11B to 11D will be described.

First, combinations are made of all power generation outputs from one to all of power generation output constant fuel cell stacks 11B to 11D, and the sum of power generation outputs of power generation output constant fuel cell stacks 11B to 11D (hereinafter, referred to as power generation output total value) is calculated for each combination.

Then, the calculated power generation output total values are arranged from a smaller value, differences between two adjacent power generation output total values are calculated, and the maximum value of the differences is regarded as the maximum value of the power generation output differences among power generation output constant fuel cell stacks 11B to 11D.

For example, in power generation output constant fuel cell stacks 11B to 11D, the case will be described in which the power generation output of power generation output constant fuel cell stack 11B is 400 W, the power generation output of power generation output constant fuel cell stack 11C is 1000 W, and the power generation output of power generation output constant fuel cell stack 11D is 1200 W. The calculated power generation output total values are 400 W. 1000 W, 1200 W, 1400 W, 1600 W, 2200 W, and 2600 W. Herein, the maximum value among two adjacent power generation output differences becomes 600 W (1000 W - 400 W, or 2200 W - 1600 W).

That is, the minimum power generation output 400 W and the maximum value 600 W of the power generation output differences are compared, and the 600 W that is a larger value is set as the maximum power generation output of power generation output variable fuel cell stack 10A.

Herein, the maximum value of the power generation output of power generation output variable fuel cell stack 10A is set to, for example, 800 W.

Furthermore, the minimum power generation output of power generation output variable fuel cell stack 10A is assumed to be 1 W, and the power generation output is set to from 1 W to 800 W. That is, the power generation output of fuel cell system 100 becomes 1 W to 3400 W (the total of power generation output 800 W of power generation output variable fuel cell stack 10A, and power generation outputs 400 W, 1000 W, and 1200 W of power generation output constant fuel cell stacks 11B to 11D).

Controller 6 determines a target power generation output generated by fuel cell system 100 in response to fluctuation of electric power consumed by the electronic device (not shown) using AC power supplied from the inverter (not shown) in fuel cell system 100. Controller 6 further selects the optimum combination from among power generation output variable fuel cell stack 10A and power generation output constant fuel cell stacks 11B to 11D (the combination that enables to obtain the power generation output closest to the electric power consumed by the electronic device utilizing AC power as much as possible), and controls operation so as to be performed by fuel sell stack(s) selected among power generation output variable fuel cell stack 10A and power generation output constant fuel cell stacks 11B to 11D.

In fuel cell system 100, when power generation is started, controller 6 opens the fuel gas switching valves (not shown) respectively provided on fuel gas supply paths 2A to 2D and oxidizing gas switching valves (not shown) provided on respective oxidizing gas supply paths (not shown) for supplying the oxidizing gas supplied from an oxidizing gas feeder (not shown) to power generation output variable fuel cell stack 10A and power generation output constant fuel cell stacks 11B to 11D, and makes the inverter flow electric current.

When power generation is stopped in fuel cell system 100, controller 6 makes the inverter stop electric current, and closes the fuel gas switching valves provided on respective fuel gas supply paths 2A to 2D and the oxidizing gas switching valves provided on the respective oxidizing gas supply paths for supplying the oxidizing gas supplied from the oxidizing gas feeder to power generation output variable fuel cell stack 10A and power generation output constant fuel cell stacks 11B to 11D.

When the target power generation output is 2000 W, controller 6 operates power generation output variable fuel cell stack 10A at a power generation output of 600 W, power generation output constant fuel cell stack 11B at a power generation output of 400 W, and power generation output constant fuel cell stack 11C at a power generation output of 1000 W so that the total power generation output of power generation output variable fuel cell stack 10A and power generation output constant fuel cell stacks 11B to 11D become 2000 W. In this case, power generation by power generation output constant fuel cell stack 11D is not performed.

Furthermore, when the target power generation output is changed from 2000 W to 3000 W, controller 6 starts power generation of power generation output constant fuel cell stack 11D that is stopped so that the total power generation output of power generation output variable fuel cell stack 10 and power generation output constant fuel cell stacks 11B to 11D becomes 3000 W. Then, controller 6 lowers the power generation output of power generation output variable fuel cell stack 10A from 600 W to 400 W, and operates power generation output constant fuel cell stack 11B and power generation output constant fuel cell stack 11C to respectively keep the power generation outputs at 400 W and 1000 W.

Controller 6 opens the fuel gas switching valve provided on fuel gas supply path 2D and the oxidizing gas switching valve provided on the oxidizing gas supplying route for supplying the oxidizing gas supplied by the oxidizing gas feeder to power generation output constant fuel cell stack 11D, and starts flowing electric current of power generation output constant fuel cell stack 11D. Then, controller 6 lowers the power generation output of power generation output variable fuel cell stack 10A from 600 W to 400 W in increments of 1 W per second.

Herein, when the power generation output of power generation output variable fuel cell stack 10A is lowered from 600 W to 400 W after power generation of stopped power generation output constant fuel cell stack 11D is started, the power generation output is temporary increased by 200 W with respect to the target power generation output. Accordingly, in this case, the increased power generation output 200 W is consumed by, for example, a heater inside fuel cell system 100.

As described above, fuel cell system 100 according to the present exemplary embodiment is configured such that the optimum combination of power generation outputs of power generation output variable fuel cell stack 10A and power generation output constant fuel cell stacks 11B to 11D is selected by controller 6 so as to be able to obtain a large power generation output as well as a wide range power generation outputs from a low power generation output to a high power generation output. Such a configuration makes it possible to more reliably keep follow-up capability of power generation output with respect to target power generation output (capability to change power generation output depending on change of target power generation output).

Furthermore, since fuel cell system 100 according to the present exemplary embodiment is provided with ejectors 5B to 5D on fuel gas circulation paths 3B to 3D of power generation output constant fuel cell stacks 11B to 11D, fuel gas that has not been used for power generation can be supplied to fuel gas supply paths 2B to 2D without using driving electric power. This makes it possible to reduce power consumption of fuel cell system 100.

Furthermore, fuel cell system 100 according to the present exemplary embodiment includes flow rate variable ejector 8A instead of flow rate regulator 4A. Such a configuration in which the opening area of the nozzle unit of ejector 5 is variable by electrical driving does not need driving electric power as compared with a flow rate variable pump as long as the opening area is not changed after the movable needle inside the nozzle is once moved. Thus, power consumption can be further reduced. Furthermore, such a configuration can reduce vibration during driving, which makes it possible to reduce noise of fuel cell system 100.

Note that, although the minimum power generation output of at least one power generation output variable fuel cell stack 10 is assumed to be 1 W, the minimum power generation output is not limited thereto, and the minimum power generation output of at least one power generation output variable fuel cell stack 10 may be set to, for example 200 W, as a lower limit.

Furthermore, in fuel cell system 100 according to the present exemplary embodiment, although increase or decrease of power generation output of at least one power generation output variable fuel cell stack 10 is set variable in increments of 1 W, the present invention is not limited thereto. It is sufficient that at least one power generation output variable fuel cell stack 10 be set to a value capable of sufficiently responding to increase or decrease of power generation output, and for example, may be set in increments of 10 W.

Furthermore, when there are a plurality of power generation output constant fuel cell stacks 11, the total value of the maximum power generation outputs of power generation output variable fuel cell stacks 10 is set at least not less than the power generation output of power generation output constant fuel cell stack 11 whose power generation output is smallest among the at least one power generation output constant fuel cell stack 11, and when there are a plurality of power generation output constant fuel cell stacks 11, the total value is set not less than the maximum value of power generation output differences among the power generation output constant fuel cell stacks 11. The maximum value of the power generation output differences among at least one power generation output constant fuel cell stack 11 is calculated as described below. That is, combinations are made of all power generation outputs from one to all of at least one power generation output constant fuel cell stack 11, and the sum of power generation outputs (power generation output total value) of power generation output constant fuel cell stacks 11 is calculated for each combination. The calculated power generation output total values are arranged from a smaller value in sequence, and the maximum value among the differences between two adjacent power generation output total values is determined. This value becomes the maximum value of the power generation output differences among at least one power generation output constant fuel cell stack.

Note that, in ejector 5, in the flow path cross section area of the nozzle unit, the flow path cross section area of the nozzle unit is set in response to a suctioned circulation fuel gas flow rate when the suctioned circulation fuel gas flow rate fluctuates when the fuel gas flow rate flowing in ejector 5 is constant.

In order to make the total of the power generation outputs of power generation output variable fuel cell stack 10A and power generation output constant fuel cell stacks 11B to 11D be 2000 W, besides the above combination, there is a combination to operate power generation output constant fuel cell stack 10A at a power generation output of 800 W, and operate power generation output constant fuel cell stack 11D at a power generation output of 1200 W. Furthermore, there is a combination to make power generation output variable fuel cell stack 10A be operated at a power generation output of 200 W, make power generation output constant fuel cell stack 11B be operated at a power generation output of 400 W, and make power generation output constant fuel cell stack 11D be operated at a power generation output of 1200 W.

When follow-up (adjustment of increase or decrease) of power generation output depending on change of the target power generation output is made quick, it is preferable that the power generation output of power generation output variable fuel cell stack 10A be set within a settable range of the power generation output because this enables flow rate variable ejector 8A change the circulation fuel gas flow rate depending on change of the target power generation output. Such a configuration is more preferable because this makes control simple more than switching between power generation and stop of power generation output variable fuel cell stack 10A and power generation output constant fuel cell stacks 11B to 11D. However, the present invention is not limited to this configuration.

Note that, when the target power generation output is changed from 2000 W to 3000 W, controller 6 may lower the power generation output of power generation output variable fuel cell stack 10A from 600 W to 400 W, and thereafter start power generation of power generation output constant fuel cell stack 11D that is in stoppage. However, the power generation output of fuel cell system 100 is temporary dropped in this case, so that the insufficient power generation output may be supplied from a commercial power source.

### INDUSTRIAL APPLICABILITY

The fuel cell system of the present invention makes it possible to provide a fuel cell system that satisfies both follow-up capability that fluctuates power generation output from a low power generation output to a high power generation output in response to fluctuation of the electric power consumed by the electronic device, and improvement of power generation efficiency of the fuel cell system by reducing power consumption of the fuel cell system. Therefore, the fuel cell system can be widely used for a system or like using a fuel cell.

### REFERENCE MARKS IN THE DRAWINGS

1: fuel gas feeder
2, 2A, 2B, 2C, 2D: fuel gas supply path
3A, 3B, 3C, 3D: fuel gas circulation path
4A: flow rate regulator
5, 5B, 5C, 5D: ejector
6: controller
7: pump
8A: flow rate variable ejector
10, 10A: power generation output variable fuel cell stack
11, 11B, 11C, 11D: power generation output constant fuel cell stack
100: fuel cell system

## Claims

1. A fuel cell system comprising:
a plurality of fuel cell stacks;
fuel gas supply paths configured to supply fuel gas to the respective plurality of fuel cell stacks; and
fuel gas circulation paths configured to return the fuel gas that has not been used in the respective plurality of fuel cell stacks to the respective fuel gas supply paths,
wherein each of the plurality of fuel cell stacks includes at least one power generation output variable fuel cell stack whose power generation output is variably set to be operated using the fuel gas supplied through corresponding one of the fuel gas supply paths, and at least one power generation output constant fuel cell stack that is operated at a constant power generation output using the fuel gas supplied through corresponding one of the fuel gas supply paths,
a flow rate regulator configured to adjust a flow rate of the fuel gas is provided on corresponding one of the fuel gas circulation paths configured to return the fuel gas that has not been used to be exhausted from the at least one power generation output variable fuel cell stack to the corresponding one of the fuel gas supply paths of the at least one power generation output variable fuel cell stack, and
an ejector is provided on a merging portion of corresponding one of the fuel gas supply paths of the at least one power generation output constant fuel cell stack and corresponding one of the fuel gas circulation paths configured to return the fuel gas that has not been used to be exhausted from the at least one power generation output constant fuel cell stack to the corresponding one of the fuel gas supply paths of the at least one power generation output constant fuel cell stack.

2. The fuel cell system according to claim 1, wherein the flow rate regulator is configured with a flow rate variable pump.

3. The fuel cell system according to claim 1, wherein the flow rate regulator is configured with a flow rate variable ejector.

4. The fuel cell system according to any one of claims 1 to 3, wherein a total value of a maximum power generation output of the at least one power generation output variable fuel cell stack is set at least not less than a power generation output of a power generation output constant fuel cell stack whose power generation output is smallest among the at least one power generation output constant fuel cell stack, and when the at least one power generation output constant fuel cell stack includes a plurality of the power generation output constant fuel cell stacks, the total value is set not less than a maximum value of power generation output differences among the at least one power generation output constant fuel cell stack.

## Patentansprüche

1. Brennstoffzellen-System, das umfasst:
eine Vielzahl von Brennstoffzellen-Stapeln;
Brennstoffgas-Zuführwege, die so eingerichtet sind, dass sie der jeweiligen Vielzahl von Brennstoffzellen-Stapeln Brennstoffgas zuführen; und
Brennstoffgas-Zirkulationswege, die so eingerichtet sind, dass sie das Brennstoffgas, das in der jeweiligen Vielzahl von Brennstoffzellen-Stapeln nicht genutzt worden ist, zu den jeweiligen Brennstoffgas-Zuführwegen zurückführen,
wobei jeder der Vielzahl von Brennstoffzellen-Stapeln wenigstens einen Brennstoffzellen-Stapel mit variablem Stromerzeugungs-Ausgang, dessen Stromerzeugungs-Ausgang variabel zum Betrieb unter Verwendung des über einen entsprechenden der Brennstoffgas-Zuführwege zugeführten Brennstoffgases eingestellt ist, sowie wenigstens einen Brennstoffzellen-Stapel mit konstantem Stromerzeugungs-Ausgang einschließt, der mit einem konstanten Stromerzeugungs-Ausgang unter Verwendung des über einen entsprechenden der Brennstoffgas-Zuführwege zugeführten Brennstoffgases betrieben wird,
ein Strömungsmengen-Regler, der so eingerichtet ist, dass er eine Strömungsmenge des Brennstoffgases reguliert, sich an einem entsprechenden der Brennstoffgas-Zirkulationswege befindet, der so eingerichtet ist, dass er das nicht genutzte Brennstoffgas zurückführt, das von dem wenigstens einen Brennstoffzellen-Stapel mit variablem Stromerzeugungs-Ausgang zu dem entsprechenden der Brennstoffgas-Zuführwege des wenigstens einen Brennstoffzellen-Stapels mit variablem Stromerzeugungs-Ausgang abgeleitet wird, und
ein Ejektor sich an einem Zusammenführungs-Abschnitt eines entsprechenden der Brennstoffgas-Zuführwege des wenigstens einen Brennstoffzellen-Stapels mit konstantem Stromerzeugungs-Ausgang und einem entsprechenden der Brennstoffgas-Zirkulationswege befindet, der so eingerichtet ist, dass er das nicht genutzte Brennstoffgas zurückführt, das von dem wenigstens einen Brennstoffzellen-Stapel mit konstantem Stromerzeugungs-Ausgang zu dem entsprechenden der Brennstoffgas-Zuführwege des wenigstens einen Brennstoffzellen-Stapels mit konstantem Stromerzeugungs-Ausgang abgeleitet wird.

2. Brennstoffzellen-System nach Anspruch 1, wobei der Strömungsmengen-Regler mit einer Pumpe mit variabler Strömungsmenge ausgeführt ist.

3. Brennstoffzellen-System nach Anspruch 1, wobei der Strömungsmengen-Regler mit einem Ejektor mit variabler Strömungsmenge ausgeführt ist.

4. Brennstoffzellen-System nach einem der Ansprüche 1 bis 3, wobei ein Gesamtwert eines maximalen Stromerzeugungs-Ausgangs des wenigstens einen Brennstoffzellen-Stapels mit variablem Stromerzeugungs-Ausgang wenigstens nicht niedriger eingestellt ist als ein Stromerzeugungs-Ausgang eines Brennstoffzellen-Stapels mit konstantem Stromerzeugungs-Ausgang, dessen Stromerzeugungs-Ausgang in dem wenigstens einen Brennstoffzellen-Stapel mit konstanten Stromerzeugungs-Ausgang am niedrigsten ist, und, wenn der wenigstens eine Brennstoffzellen-Stapel mit konstantem Stromerzeugungs-Ausgang eine Vielzahl von Brennstoffzellen-Stapeln mit konstantem Stromerzeugungs-Ausgang einschließt, der Gesamtwert nicht niedriger eingestellt ist als ein Maximalwert von Differenzen des Stromerzeugungs-Ausgangs in dem wenigstens einen Brennstoffzellen-Stapel mit konstantem Stromerzeugungs-Ausgang.

## Revendications

1. Système de pile à combustible comprenant:
une pluralité d'empilements de piles à combustible:
des voies d'alimentation en gaz combustible configurées pour alimenter en gaz combustible la pluralité respective d'empilements de piles à combustible; et
des voies de circulation de gaz combustible configurées pour renvoyer le gaz combustible qui n'a pas été utilisé dans la pluralité respective d'empilements de piles à combustible vers les voies d'alimentation en gaz combustible respectives,
dans lequel chaque pile de la pluralité d'empilements de piles à combustible comprend au moins un empilement de piles à combustible variable à rendement de production d'énergie dont le rendement de production d'énergie est réglé de manière variable pour fonctionner avec le gaz combustible fourni par l'une des voies d'alimentation en gaz combustible correspondants, et au moins un empilement de piles à combustible à rendement de production constant fonctionnant avec un rendement de production d'énergie constant à l'aide du gaz combustible acheminé par l'une des voies d'alimentation en gaz combustible,
un régulateur de débit configuré pour régler le débit du gaz combustible est prévu sur l'une des voies de circulation de gaz combustible correspondant, afin de renvoyer le gaz combustible qui n'a pas été utilisé pour être évacué dudit au moins un empilement de piles à combustible variable à rendement de production d'énergie vers la voie correspondante parmi les voies de circulation de gaz combustible dudit au moins empilement de piles à combustible variable à rendement de production d'énergie, et
un éjecteur est prévu sur une partie de fusion de l'une des voies par les voies d'alimentation en gaz combustible dudit au moins empilement de piles à combustible variable à rendement de production d'énergie et une voie correspondante parmi les voies de circulation de gaz combustible configurées pour renvoyer le gaz combustible qui n'a pas été utilisé, pour être épuisé à partir dudit au moins empilement de piles à combustible variable à rendement de production d'énergie à la voie correspondante parmi les voies d'alimentation en gaz combustible dudit au moins empilement de piles à combustible variable à rendement de production d'énergie.

2. Système de pile à combustible selon la revendication 1, dans lequel le régulateur de débit est configuré avec une pompe à débit variable.

3. Système de pile à combustible selon la revendication 1, dans lequel le régulateur de débit est configuré avec un éjecteur à débit variable.

4. Système de pile à combustible selon l'une quelconque des revendications 1 à 3, dans lequel une valeur totale d'un rendement de production d'énergie maximal dudit au moins un empilement de piles à combustible variable à rendement de production d'énergie est définie comme au moins supérieure ou égale au rendement de production d'énergie d'un empilement de piles à combustible à rendement de production d'énergie constant dont le rendement de production d'énergie est le plus faible parmi ledit au moins empilement de piles à combustible à rendement de production d'énergie constant dont le rendement de production d'énergie est le plus petit parmi ledit au moins un empilement de piles à combustible à rendement de production d'énergie constant, et lorsque ledit un empilement de piles à combustible à rendement de production d'énergie constant comprend une pluralité d'empilements de piles à combustible à rendement de production d'énergie constant, la valeur totale est fixée est définie comme supérieure ou égale à une valeur maximale des différences de rendement de production d'énergie parmi ledit au moins un empilement de piles à combustible à rendement de production d'énergie constant.
